# EUROPÄISCHE PATENTANMELDUNG

(11) **EP 2 698 770 A2**
(43) Veröffentlichungstag der Anmeldung: **19.02.2014**
(21) Anmeldenummer: 13003737.7
(22) Anmeldetag: 26.07.2013
(51) Int. Cl.: G07C 5/08

(54) **Verkehrsanlage zum autonomen Befahren und Verfahren zum Ermitteln einer Kraftfahrzeugbeschädigung**

(30) Priorität: 17.08.2012 DE 102012017497
(71) Anmelder: AUDI AG, 85045 Ingolstadt (DE)
(72) Erfinder: Reichel, Michael, DE - 85049 Ingolstadt (DE); Siegel, Andreas, DE - 85049 Ingolstadt (DE)
(74) Vertreter: Thielmann, Frank

(57) **Zusammenfassung**

Unfallschäden, die während eines autonomen Fahrens eines Kraftfahrzeugs auftreten, sollen zuverlässiger erkannt werden. Dazu wird eine Verkehrsanlage mit einem Fahrbereich (1), der von einem Kraftfahrzeug (2) autonom befahrbar ist, bereitgestellt. Die Verkehrsanlage besitzt außerdem eine Erfassungsvorrichtung (4, 12) zur Erfassung eines ersten Zustands des Kraftfahrzeugs (2) in einem Einfahrtbereich (3) außerhalb des Fahrbereichs (1) und zur Erfassung eines zweiten Zustands in einem Ausfahrtbereich (11) innerhalb des Fahrbereichs (1). Außerdem besitzt die Verkehrsanlage eine Auswerteeinrichtung (6) zum Ermitteln eines etwaigen Unterschieds des zweiten Zustands gegenüber dem ersten Zustand hinsichtlich einer Beschädigung des Kraftfahrzeugs (2).

## Beschreibung

Die vorliegende Erfindung betrifft eine Verkehrsanlage mit einem Fahrbereich, der von einem Kraftfahrzeug autonom befahrbar ist. Darüber hinaus betrifft die vorliegende Erfindung ein Verfahren zum Ermitteln einer Beschädigung an einem Kraftfahrzeug.

Während ihres Betriebs werden Kraftfahrzeuge gelegentlich beschädigt. Zum Teil werden die Schäden sofort repariert und zum anderen Teil werden sie erst später oder nicht repariert. Wird das Kraftfahrzeug erneut beschädigt, und es soll der durch die zweite Beschädigung hervorgerufene Schadensumfang festgestellt werden, so ist dies meist nicht zweifelsfrei feststellbar. Vielfach entsteht so die Situation, dass bei einem Unfall mit einem Fahrzeug, das schon vorher Unfallschäden hatte, die Reparaturen unberechtigterweise vom letzten Unfallverursacher mitgetragen werden.

Ein weiteres Problem hinsichtlich der Unfallschadenserkennung kann bei autonomem Fahren, bei dem das Fahrzeug vollautomatisch fährt, auftreten. Bei dem autonomen Fahren orientiert sich das Fahrzeug selbst an seiner Umgebung und gegebenenfalls erhält es auch zusätzliche Informationen von Systemen, die ein vollautomatisches bzw. autonomes Fahren unterstützen. Bei derartigen vollautomatischen Systemen ist nicht auszuschließen, dass die Verantwortung von Unfallschäden auf das System und damit auf den Fahrzeughersteller oder ein dafür spezialisiertes Unternehmen übergeht. In diesem Zusammenhang ist es wichtig, im Zweifelsfall beweisen zu können, dass Schäden am eigenen oder an anderen Fahrzeugen bereits vor dem Unfall bestanden bzw. dass gar kein Unfall vorlag, da die bei Beendigung des autonomen Fahrens sichtbaren Schäden schon bestanden, bevor das Fahrzeug in den vollautomatischen Modus geschaltet wurde.

Auch bei Fahrzeugen, die manuell von Personen bedient werden, ergeben sich ähnliche Probleme der Unfallschadenserkennung. Eine bekannte Lösung ist die eines Fahrtenschreibers. Allerdings hat sich diese Lösung aus verschiedenen Gründen nicht durchgesetzt. Einer dieser Gründe ist, dass gegebenenfalls Daten aufgezeichnet werden, die den Besitzer des Fahrtenschreibers selbst belasten.

Die US 6,630,893 B2 beschreibt einen computergesteuerten Parkdienst, in dem ein Schaden einem Zeitraum vor oder nach einem Parkvorgang zugeordnet werden kann.

Die US 2008/0183535 A1 beschreibt ein Verfahren zum Verfolgen von Schäden an Mietwägen.

Die DE 10 2006 048 578 A1 beschreibt ein Verfahren zum Ermitteln einer Veränderung einer Form eines dreidimensionalen Objekts.

Die US 4,990,757 A beschreibt ein Parksystem, in dem ein Fahrzeug auf offensichtliche Schäden überprüft wird, bevor es in Obhut genommen wird.

Die WO 91/09275 A2 beschreibt ein System zum Orten und Leiten von Fahrzeugen.

Aus der Druckschrift DE 101 11 421 A1 ist ein Fahrzeugüberwachungssystem bekannt, das eine an einem Fahrzeug vorgesehene Bildaufnahmeanordnung zur Erzeugung von einem Bereich einer Umgebung des Fahrzeugs entsprechender Bildinformation,' eine an dem Fahrzeug vorgesehene Sensoranordnung zur Erzeugung von den Zustand des Fahrzeugs charakterisierender Sensorinformation, und eine Steuereinrichtung umfasst, welche, beruhend auf der Sensorinformation, das Bereithalten wenigstens von mit Bildinformation im Zusammenhang stehenden Daten auf einem Speichermedium zur nachfolgenden Auswertung veranlasst.

Darüber hinaus offenbart die Druckschrift DE 10 2005 012 909 B4 eine Vorrichtung zur Erfassung von Schäden an einem Kraftfahrzeug. Insbesondere sind dort Wanderelemente beschrieben, die zur Erfassung der Schäden mechanische in elektrische Energie wandeln.

Ferner ist in der Druckschrift DE 10 2006 051 246 A1 eine Methode zum Nachweis der Vorschäden an Kfz-Karosserieteilen für die Versicherungswirtschaft beschrieben. Dabei erfolgt eine zerstörungsfreie Prüfung des Kraftfahrzeugs insbesondere mit Ultraschalltechnik.

Die Aufgabe der vorliegenden Erfindung besteht darin, eine Verkehrsanlage bereitzustellen, in der autonomes Fahren möglich ist und mit der zweifelsfrei feststellbar ist, ob eine Beschädigung des Kraftfahrzeugs während des autonomen Fahrens entstanden ist. Darüber hinaus soll ein entsprechendes Verfahren zum Ermitteln einer Beschädigung an dem Kraftfahrzeug bereitgestellt werden.

Erfindungsgemäß wird diese Aufgabe gelöst durch eine Verkehrsanlage umfassend einen Fahrbereich, der von einem Kraftfahrzeug autonom befahrbar ist, eine stationäre Erfassungseinrichtung zur Erfassung eines ersten Zustands des Kraftfahrzeugs in einem Einfahrtbereich außerhalb des Fahrbereichs und zur Erfassung eines zweiten Zustands in einem Ausfahrtbereich innerhalb des Fahrbereichs, und eine Auswerteeinrichtung zum Ermitteln eines etwaigen Unterschieds des zweiten Zustands gegenüber dem ersten Zustand hinsichtlich einer Beschädigung des Kraftfahrzeugs. Die Auswerteeinrichtung ist dazu vorbereitet, Daten aus der stationären Erfassungseinrichtung mit fahrzeuginternen Daten abzugleichen.

Darüber hinaus wird erfindungsgemäß bereitgestellt ein Verfahren zum Ermitteln einer Beschädigung an einem Kraftfahrzeug durch Erfassen eines ersten Zustands des Kraftfahrzeugs in einem Einfahrtbereich außerhalb eines Fahrbereichs, autonomes Befahren des Fahrbereichs durch das Kraftfahrzeug, Erfassen eines zweiten Zustands in einem Ausfahrtbereich innerhalb des Fahrbereichs, und Ermitteln eines etwaigen Unterschieds des zweiten Zustands gegenüber dem ersten Zustand hinsichtlich einer Beschädigung des Kraftfahrzeugs, wobei Daten aus einer stationären Erfassungseinrichtung mit fahrzeuginternen Daten abgeglichen werden In vorteilhafter Weise ist es somit möglich, sicher nachweisen zu können, dass während des autonomen Betriebs des Kraftfahrzeugs in dem Fahrbereich der Verkehrsanlage eine Beschädigung des Kraftfahrzeugs aufgetreten ist oder nicht. Dies wird dadurch realisiert, dass vor dem autonomen Fahren im Einfahrtbereich der Anfangszustand des Fahrzeugs und vor dem Beenden des autonomen Fahrens der Endzustand des Kraftfahrzeugs festgestellt und daraus eine Zustandsänderung ermittelt werden kann, welche auf eine Beschädigung des Kraftfahrzeugs schließen lässt. Die Begriffe "autonom" und "vollautomatisiert" bzw. "vollautomatisch" werden hier gleichbedeutend verwendet.

Vorzugsweise handelt es sich bei dem Fahrbereich um einen Parkplatz, ein Parkhaus, einen Tunnelabschnitt oder einen Autobahnabschnitt. Es können aber auch beliebige andere Fahrbereiche, die autonom befahrbar sind, als Einsatzgebiet für die Erfindung in Frage kommen.

Vorteilhafterweise bezieht sich der erste und zweite Zustand des Kraftfahrzeugs jeweils auf eine Außenhülle des Kraftfahrzeugs. In erster Linie lassen sich nämlich Beschädigungen des Kraftfahrzeugs an der Außenhülle feststellen. Die wesentlichen Teile der Außenhülle eines Fahrzeugs sind die Karosserie und die Glasscheiben.

Mit der Erfassungseinrichtung können gegebenenfalls Daten, die von dem Kraftfahrzeug per Funk gesendet werden, empfangbar und für die Auswerteeinrichtung zur Feststellung einer etwaigen Beschädigung bereitstellbar sein. Zur Beurteilung einer Beschädigung während des autonomen Betriebs werden dann nicht nur die beiden erfassten Zustände, sondern beispielsweise auch intrinsische Daten des Kraftfahrzeugs herangezogen. Diese Daten können in dem Kraftfahrzeug in einem internen Speicher gespeichert sein. Beispielsweise stammen diese Daten von einem oder mehreren Beschleunigungssensoren oder einer anderen Unfallsensorik, die einen unfalltypischen Ruck aufgenommen haben/hat.

Besonders vorteilhaft ist, wenn von der Auswerteeinrichtung der erste Zustand und der zweite Zustand des Kraftfahrzeugs jeweils mittels eines Modells der Außenhülle des Kraftfahrzeugs darstellbar sind. Die Außenhülle kann damit zum jeweiligen Zeitpunkt virtuell dargestellt bzw. bereitgestellt werden.

Ferner ist es von Vorteil, wenn bereits vor dem autonomen bzw. vollautomatischen Betriebszustand definitiv festgestellt werden kann, ob das Fahrzeug eine Beschädigung aufweist. Hierzu kann dann von der Auswerteeinrichtung eine Klassifikation des Kraftfahrzeugs anhand von Daten der Erfassungseinrichtung durchgeführt, anhand dieser Klassifikation eine Referenzaußenhülle bereitgestellt und auf der Basis des Modells der Außenhülle im ersten Zustand und der Referenzaußenhülle eine Beschädigung des Kraftfahrzeugs im Einfahrtbereich festgestellt werden.

Außerdem ist es von Vorteil, wenn die Verkehrsanlage eine Kommunikationseinrichtung aufweist, mit der Daten über den ersten und/oder zweiten Zustand zu dem Kraftfahrzeug oder einem Mobilgerät übertragbar sind. Somit kann dann der Fahrer des Kraftfahrzeugs oder der Betreiber der Verkehrsanlage optisch oder anderweitig über den Zustand des Fahrzeugs, insbesondere seiner Beschädigungen, unverzüglich informiert werden.

Die Kommunikationseinrichtung kann dazu ausgelegt sein, eine Anfrage entgegenzunehmen und davon abhängig die Daten über den ersten und/oder zweiten Zustand zu senden. Somit ist es möglich, die Fahrzeugzustände nicht nur rechnerisch auszuwerten, sondern entsprechende Informationen auch an den Fahrer oder den Betreiber der Verkehrsanlage gegebenenfalls drahtlos zu schicken.

Ferner ist es günstig, wenn die Auswerteeinrichtung dazu ausgebildet ist, bei festgestellter Beschädigung des Fahrzeugs automatisch eine Nachricht an eine externe Stelle zu schicken und/oder von dieser zu empfangen. Damit wäre es möglich, beispielsweise einen Serviceanbieter über entstandene Schäden zu informieren, der dann gegebenenfalls Reparaturmaßnahmen einleiten kann.

Aus den oben geschilderten Mitteln im Zusammenhang mit der erfindungsgemäßen Verkehrsanlage sind auch die entsprechenden Verfahrensschritte zu entnehmen, mit denen das oben genannte erfindungsgemäße Verfahren weitergebildet werden kann.

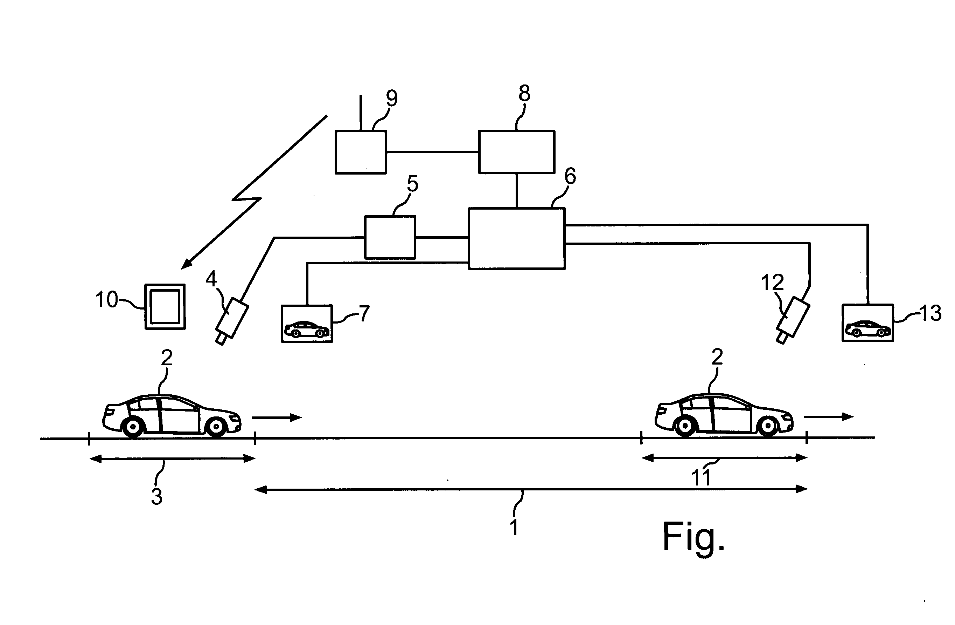

Die vorliegende Erfindung wird nun anhand der beigefügten Zeichnung näher erläutert, die eine Prinzipskizze einer erfindungsgemäßen Verkehrsanlage mit Unfallschadenerkennung wiedergibt.

Die nachfolgend näher geschilderten Ausführungsbeispiele stellen bevorzugte Ausführungsformen der vorliegenden Erfindung dar.

In der Figur ist beispielhaft eine Verkehrsanlage dargestellt. Sie weist einen Fahrbereich 1 auf, in dem ein Kraftfahrzeug 2 autonom fahren kann. Bei diesem Fahrbereich 1 kann es sich um einen Parkplatz handeln, auf dem das Fahrzeug 2 vollautomatisch gelenkt bzw. gefahren wird. Der Fahrbereich 1 kann aber auch ein Parkhaus oder einen Teil davon symbolisieren. Alternativ kann es sich bei dem Fahrbereich 1 auch um einen Tunnelabschnitt, einen Autobahnabschnitt, ein Fährendeck oder Ähnliches handeln.

Das autonome bzw. vollautomatische Fahren in dem Fahrbereich 1 wird in der Regel durch fahrzeuginterne Sensorik realisiert. Das Fahrzeug orientiert sich dabei an vorgegebenen Orientierungsmarken bzw. -elementen in dem oder um den Fahrbereich 1. Gegebenenfalls wird die Fahrzeugsteuerung durch fahrzeugexterne Sensorelemente, die dann Teil der Verkehrsanlage sind, unterstützt.

Bevor das Fahrzeug 2 in den für das autonome Fahren vorgesehenen Fahrbereich 1 einfährt, gelangt es in einen Einfahrtbereich 3. Dort wird es beispielsweise von einer Kamera 4 und/oder einer anderen Sensorik erfasst. Speziell erfasst die Sensorik bzw. Kamera 4 der Verkehrsanlage beispielsweise die Außenhülle des Fahrzeugs 2. Hierzu zählen die Karosserie, die Fensterscheiben, die Räder, die Lichter, die Außenspiegel usw. Optional nimmt die Sensorik auch Daten entgegen, die das Fahrzeug 2 beispielsweise per Funk sendet, und welche Informationen über etwaige Unfälle oder dergleichen enthalten. So können beispielsweise in einem Speicher des Fahrzeugs 2 Daten von einem fahrzeuginternen Beschleunigungssensor oder einer bordeigenen Unfallsensorik abgespeichert sein, die über unfalltypische Beschleunigungen und Rücke, die dem Fahrzeug widerfahren sind, Auskunft geben. Somit können auch Zustände des Fahrzeugs erfasst werden, die sich nicht oder nur minimal in der Außenhülle des Fahrzeugs widerspiegeln. Neben den Videodaten (Fotos) über die Außenhülle können auch beispielsweise Hüllenvermessungsdaten wie z.B. Abstandswerte eines Laserscans und weitere Informationen, aus denen sich die Hülle rekonstruieren lässt, in der durch die Videokamera 4 symbolisierten Erfassungseinrichtung aufgenommen werden.

Die Daten von der Erfassungseinrichtung bzw. der Videokamera 4 etc. können in einer Speichereinheit 5 zwischengespeichert werden. Diese Daten repräsentieren dann den aktuellen Zustand des Fahrzeugs 2 in dem Einfahrtbereich 3, bevor das Fahrzeug 2 in den Fahrbereich 1 für autonomes Fahren einfährt. Damit wird also der Zustand des Fahrzeugs 2 vor dem autonomen Fahren festgehalten.

Gegebenenfalls werden die Daten von der Speichereinrichtung 5 bzw. der Erfassungseinrichtung 4 an eine Auswerteeinrichtung 6 weitergeleitet, die beispielsweise eine Anzeigeeinheit 7 ansteuert. Mit dieser Anzeigeeinheit 7 kann der Zustand des Fahrzeugs 2 für den Fahrer vor dem autonomen Fahren visualisiert werden. Er kann sich dadurch über den aktuellen Ist-Zustand seines Fahrzeugs informieren.

Optional können die Daten von der Auswerteeinheit 6 auch über eine Funktionseinheit 8 zu einer Kommunikationseinheit 9 weitergeleitet werden, welche beispielsweise drahtlos entsprechende Bilddaten oder andere Informationen an ein mobiles Endgerät 10 (z.B. Smartphone) weiterleitet. So wird dann der Fahrer mittels des mobilen Endgeräts 10 über den aktuellen Zustand seines Fahrzeugs 2 informiert.

Nachdem die Datenerfassung vor dem autonomen Fahren im Einfahrtbereich 3 abgeschlossen ist, kann der autonome bzw. vollautomatische Fahrmodus des Fahrzeugs 2 aktiviert werden. Insgesamt kann die Datenerfassung im Einfahrtbereich 3 automatisch angestoßen werden, indem das Fahrzeug dort detektiert wird. Alternativ wird die Datenerfassung im Einfahrtbereich 3 manuell durch den Fahrer ausgelöst.

Die Auswerteeinheit 6 kann von den erfassten Daten ein Modell der Außenhülle des Fahrzeugs 2 erstellen und dabei gegebenenfalls die Daten verschiedener Quellen unter Beachtung zeitlicher und räumlicher Zusammenhänge fusionieren. Dieses Modell stellt dann virtuell den Zustand der Außenhülle im Einfahrtbereich 3, also den ersten Zustand vor dem autonomen Fahren, dar.

Unter Umständen ist es für den Fahrer bzw. den Betreiber der Verkehrsanlage günstig, bereits vor dem autonomen Betrieb des Fahrzeugs über Vorschäden des Fahrzeugs in Kenntnis gesetzt zu werden. Dazu muss eine Referenzaußenhülle eines unbeschädigten Fahrzeugs des gleichen Typs bereitgestellt werden. Folglich muss die Auswerteeinrichtung 6 das Fahrzeug anhand der erfassten Daten und gegebenenfalls weiterer Daten (Car2X, Nummernschild, etc.) klassifizieren. Die aktuelle Außenhülle und die Referenzaußenhülle gleicht die Auswerteeinrichtung 6 miteinander ab. Differenzen zwischen beiden Außenhüllen werden unter Umständen als Beschädigungen erfasst. Das Ergebnis dieses Abgleichs, d.h. die eventuell vorhandenen Beschädigungen, werden auf Anfrage oder unaufgefordert beispielsweise über die Anzeigeeinheit 7 oder das mobile Endgerät 10 zur Verfügung gestellt.

Um Beschädigungen eindeutig identifizieren zu können, können die Daten aus der stationären Erfassungseinrichtung auch mit fahrzeuginternen Daten abgeglichen werden. Mit diesen fahrzeuginternen Daten können Vorschäden bekräftigt oder entkräftigt werden.

Am Ende des autonomen Fahrens, bevor das Fahrzeug 2 den Fahrbereich 1 verlässt, gerät das Fahrzeug 2 in einen Ausfahrtbereich 11, der Teil des Fahrbereichs 1 ist, während der Einfahrtbereich 3 nicht Teil des Fahrbereichs 1 ist. Bevor also der vollautomatische Fahrmodus des Kraftfahrzeugs 2 abgeschaltet wird, wird erneut sein aktueller Ist-Zustand erfasst. Dies geschieht mit einer Sensorik 12, die im Wesentlichen der im Einfahrtbereich 3 entspricht. Diese Sensorik 12 ist ebenfalls Teil der Erfassungseinrichtung. Mit ihr ist es möglich, den Ist-Zustand am Ende des autonomen Fahrens (d.h. zweiter Zustand) zu erfassen. Gegebenenfalls wird auch hier der Ist-Zustand über eine stationäre Anzeigeeinheit 13 dargestellt. Alternativ werden diese Daten beispielsweise per Funk in das Fahrzeug oder das mobile Endgerät 10 des Fahrers übertragen.

Aus den im Ausfahrtbereich 11 erfassten Daten gewinnt die Auswerteeinrichtung 6 ein zweites virtuelles Modell der Außenhülle des Kraftfahrzeugs 2. Nun kann dieses zweite Modell der Außenhülle vom Ausfahrtbereich 11 mit dem ersten Modell der Fahrzeughülle vom Einfahrtbereich 3 verglichen werden. Das erste Modell stellt also hier das Referenzmodell dar. Die Differenz zwischen beiden Modellen ergibt den Schaden am Fahrzeug, der während des autonomen Fahrens entstanden ist. Diese den Schaden charakterisierenden Daten können wiederum in der Speichereinrichtung 5 abgelegt werden. Durch qualifizierte Abfrage können diese Daten von der Verkehrsanlage zur Verfügung gestellt werden. Insbesondere kann die qualifizierte Anfrage auch durch das Fahrzeug 2 selbst erfolgen, woraufhin die Daten automatisch an das Fahrzeug 2 übermittelt werden.

Die Funktionseinheit 8 kann hier die Funktion der Entgegennahme der Anfragen zur Ausgabe der Daten übernehmen. Außerdem kann sie die Anfragen verarbeiten und die Informationen in einer speziell vorgegebenen Form versenden. Ferner kann die Funktionseinheit 8 gegebenenfalls auch selbstständig Kontakt mit einem Serviceanbieter aufnehmen, der den Schaden beheben kann. So kann beispielsweise automatisch ein Termin mit einer Reparaturwerkstatt vereinbart werden. Gegebenenfalls nimmt die Funktionseinheit 8 auch automatisch mit Versicherungs- oder Datensicherungsunternehmen oder dergleichen Kontakt auf. Dies kann im Rahmen einer Schadensdokumentation von Vorteil sein.

Im einfachsten Fall werden (z.B. bei der Übergabe und beim Abholen des Fahrzeugs an der Einfahrt/Ausfahrt zum automatischen Parkhaus) Fotos des Fahrzeugs von allen Seiten aufgenommen und ohne weitere Auswertung gespeichert. Erst wenn später gegebenenfalls vom Fahrzeugeigentümer Haftungsansprüche eingefordert werden, kann durch Auswerten der Fotos durch den Betreiber der Verkehrsanlage (hier des automatischen Parkhauses) festgestellt werden, ob diese Ansprüche gerechtfertigt sind.

Erfindungsgemäß werden also zur Vermeidung von unrechtmäßigen Haftungsansprüchen aus Unfallvorschäden gegenüber dem Fahrzeughersteller oder z.B. Parkhausbetreiber bei autonomer bzw. vollautomatisierter Fahrt Unfallvorschäden zuverlässig festgestellt und dokumentiert, bevor das Fahrzeug in den autonomen Modus geschaltet wird. Bei Beendigung des autonomen Modus kann dann ebenfalls die Unversehrtheit des Fahrzeugs ermittelt werden, um spätere Haftungsansprüche aus Unfallschäden zu vermeiden, die nachträglich aufgetreten sind.

## Patentansprüche

1. Verkehrsanlage, wobei die Verkehranlage aufweist:
- einen Fahrbereich (1), der von einem Kraftfahrzeug (2) autonom befahrbar ist,
- eine stationäre Erfassungseinrichtung (4, 12) zur Erfassung eines ersten Zustands des Kraftfahrzeugs (2) in einem Einfahrtbereich (3) außerhalb des Fahrbereichs (1) und zur Erfassung eines zweiten Zustands in einem Ausfahrtbereich (11) innerhalb des Fahrbereichs (1), und
- eine Auswerteeinrichtung (6) zum Ermitteln eines etwaigen Unterschieds des zweiten Zustands gegenüber dem ersten Zustand hinsichtlich einer Beschädigung des Kraftfahrzeugs (2);
**dadurch gekennzeichnet, dass**
die Auswerteeinrichtung (6) dazu vorbereitet ist, Daten aus der stationären Erfassungseinrichtung (4, 12) mit fahrzeuginternen Daten abzugleichen.

2. Verkehrsanlage nach Anspruch 1, wobei der Fahrbereich (1) ein Parkplatz, ein Parkhaus, ein Tunnelabschnitt oder ein Autobahnabschnitt ist.

3. Verkehrsanlage nach Anspruch 1 oder 2, wobei der erste und zweite Zustand sich jeweils auf eine Außenhülle des Kraftfahrzeugs (2) beziehen.

4. Verkehrsanlage nach einem der vorhergehenden Ansprüche, wobei mit der Erfassungseinrichtung (4) Daten, die von dem Kraftfahrzeug (2) per Funk gesendet werden, empfangbar und für die Auswerteeinrichtung (6) zur Feststellung einer etwaigen Beschädigung des Kraftfahrzeugs (2) bereitstellbar sind.

5. Verkehrsanlage nach Anspruch 3, wobei von der Auswerteeinrichtung (6) der erste Zustand und der zweite Zustand des Kraftfahrzeugs (2) jeweils mittels eines Modells der Außenhülle des Kraftfahrzeugs (2) insbesondere durch eine Visualisierungseinrichtung (7, 13) darstellbar sind.

6. Verkehrsanlage nach Anspruch 5, wobei von der Auswerteeinrichtung (6) eine Klassifikation des Kraftfahrzeugs (2) anhand von Daten der Erfassungseinrichtung (4) durchführbar, anhand dieser Klassifikation eine Referenzaußenhülle bereitstellbar und auf der Basis des Modells der Außenhülle im ersten Zustand und der Referenzaußenhülle eine Beschädigung des Kraftfahrzeugs (2) im Einfahrtbereich (3) feststellbar ist.

7. Verkehrsanlage nach einem der vorhergehenden Ansprüche, die eine Kommunikationseinrichtung (9) aufweist, mit der Daten über den ersten und/oder zweiten Zustand zu dem Kraftfahrzeug (2) oder dem Mobilgerät (10) übertragbar sind.

8. Verkehrsanlage nach Anspruch 7, wobei die Kommunikationseinrichtung (9) dazu ausgelegt ist, eine Anfrage entgegenzunehmen und davon abhängig die Daten über den ersten und/oder zweiten Zustand zu senden.

9. Verkehrsanlage nach einem der vorhergehenden Ansprüche, wobei die Auswerteeinrichtung (6) dazu ausgebildet ist, bei festgestellter Beschädigung des Kraftfahrzeugs (2) automatisch eine Nachricht an eine externe Stelle zu schicken und/oder von dieser zu empfangen.

10. Verfahren zum Ermitteln einer Beschädigung an einem Kraftfahrzeug (2), wobei das Verfahren folgende Schritte aufweist:
- Erfassen eines ersten Zustands des Kraftfahrzeugs (2) in einem Einfahrtbereich (3) außerhalb eines Fahrbereichs (1),
- autonomes Befahren des Fahrbereichs (1) durch das Kraftfahrzeug (2),
- Erfassen eines zweiten Zustands in einem Ausfahrtbereich (11) innerhalb des Fahrbereichs (1), und
- Ermitteln eines etwaigen Unterschieds des zweiten Zustands gegenüber dem ersten Zustand hinsichtlich einer Beschädigung des Kraftfahrzeugs (2);
**dadurch gekennzeichnet, dass**
- Daten aus einer stationären Erfassungseinrichtung (4, 12) mit fahrzeuginternen Daten abgeglichen werden
